# EUROPÄISCHE PATENTSCHRIFT

(11) **EP 0 761 901 B1**
(45) Veröffentlichungstag und Bekanntmachung des Hinweises auf die Patenterteilung: **28.06.2000**
(21) Anmeldenummer: 96250168.0
(22) Anmeldetag: 07.08.1996
(51) Int. Cl.: E04D 3/08, H01L 31/042

(54) **Vorrichtung zur Befestigung von plattenförmigen Bauteilen, insbesondere von Solarmodulen und Sonnenkollektoren**
Device for fastening plate-shaped building elements, particularly for solar modules and solar collectors
Dispositif pour la fixation d'éléments de construction en forme de plaques, en particulier pour modules solaires et collecteurs solaires

(30) Priorität: 09.08.1995 DE 19529351
(43) Veröffentlichungstag der Anmeldung: 12.03.1997
(73) Patentinhaber: RegEn Energiesysteme GmbH, 15827 Dahlewitz (DE)
(72) Erfinder: Genschorek, Gido, 15827 Dahlewitz (DE)
(74) Vertreter: Kietzmann, Manfred

(56) Entgegenhaltungen:
- BE-A- 456 291
- BE-A- 906 028
- DE-A- 3 634 729
- DE-U- 9 310 063
- DE-U- 9 409 453
- DE-U- 9 415 616

## Beschreibung

Die Erfindung bezieht sich auf eine Vorrichtung zur Befestigung von plattenförmigen Bauteilen, insbesondere von Solarmodulen und Sonnenkollektoren, vorzugsweise auf schrägen Flächen, insbesondere auf Steildächern, wobei die plattenförmigen Bauteile in Längsrichtung, schuppenförmig übereinanderliegend, auf diesen angeordnet sind und der in Richtung der höherliegenden Seite oben liegende Bauteil mit seinem vorderen Ende das hintere Ende des darunterliegenden Bauteiles übergreift und die plattenförmigen Bauteile auf den Profilen, die in Längsrichtung, an im wesentlichen horizontal liegenden Gerüstteilen, wie Dachlatten, befestigt sind und mit ihrem unteren Ende in Haken eingehängt sind, wobei jedes Profil auf seiner oberen Seite zwei sich in dessen Längsrichtung erstrekkende, seitliche Auflageflächen und eine zwischen diesen Auflageflächen liegende Vertiefung aufweist und dabei die Bauteile mit ihren seitlichen Rändern auf jeweils einer der Auflageflächen des Profils aufliegen und ein zwischen diesen frei bleibender Spalt über der Vertiefung angeordnet ist.

Es ist bereits eine Vorrichtung der vorstehenden Art durch das G 94 09 453 U1 bekannt. Diese Vorrichtung dient zur Befestigung von rahmenlosen Solarmodulen auf schrägen Flächen, insbesondere Steildächern. Die Profile sind dabei als Holzprofile ausgebildet. Eine derartige Vorrichtung ist besonders für Dächer von kleineren Häusern, wie Einfamilienhäuser, geeignet wobei dann an den horizontal liegenden hölzernen Dachlatten die Holzprofile befestigt sind.

Zur Vermeidung von Wasserschäden ist auf der oberen Seite des Holzprofils eine Abdichtung vorgesehen. Dieses erfordert einen zusätzlichen Aufwand. Zur Ausbildung der Vertiefung besteht das Holzprofil aus drei fest miteinander verbundenen Holzteilen, wobei die Stirnseite des mittleren Teiles tiefer als die der äußeren Teile angeordnet ist.

Eine derartige Ausbildung der Vorrichtung ist vielfach ökologisch sinnvoll. Bei der Montage größerer Solaranlagen oder auch bei der vertikalen Anordnung von plattenförmigen Bauteilen, wie beispielsweise vorgehängten Fassaden, ist die Verwendung von Holzprofilen weniger geeignet. Die mit einem Holzprofil erreichte Festigkeit, insbesondere die erforderliche Verwindungssteifigkeit, ist nicht ausreichend. Eine Erhöhung der Festigkeit vergrößert die Einsatzmenge und auch das Einsatzgewicht des Holzes, so daß ökologische Nachteile eintreten.

Der Erfindung liegt die Aufgabe zugrunde eine Vorrichtung zur Befestigung von plattenförmigen Bauteilen, insbesondere von Solarmodulen und Sonnenkollektoren, vorzugsweise auf schrägen Flächen, insbesondere auf Steildächern, wobei die plattenförmigen Bauteile in Längsrichtung, schuppenförmig übereinanderliegend, auf diesen angeordnet sind und der in Richtung der höherliegenden Seite oben liegende Bauteil mit seinem vorderen Ende das hintere Ende des darunterliegenden Bauteiles übergreift und die plattenförmigen Bauteile auf den Profilen, die in Längsrichtung, an im wesentlichen horizontal liegenden Gerüstteilen, wie Dachlatten, befestigt sind und mit ihrem unteren Ende in Haken eingehängt sind, wobei jedes Profil auf seiner oberen Seite zwei sich in dessen Längsrichtung erstrekkende, seitliche Auflageflächen und eine zwischen diesen Auflageflächen liegende Vertiefung aufweist und dabei die Bauteile mit ihren seitlichen Rändern auf jeweils einer der Auflageflächen des Profils aufliegen und ein zwischen diesen frei bleibender Spalt über der Vertiefung angeordnet ist, zu schaffen, die es ermöglicht plattenförmige Bauteile unterschiedlicher Ausbildung auch auf großen Flächen, kostengünstig und mit ausreichender Festigkeit zu montieren.

Erfindungsgemäß wird die Aufgabe dadurch gelöst, daß das Profil einen nach unten offenen U-Profilteil aufweist, wobei mindestens an einem seiner vertikalen Schenkel, an dessen freiem Ende, sich ein nach oben offener Winkel anschließt, dessen vertikaler Außenschenkel das Profil seitlich begrenzt, wobei in dem Schenkel des U-Profilteiles und dem zugehörigen Außenschenkel des nach oben offenen Winkels in gleicher Höhe ein horizontaler Absatz angeordnet ist, der die Schenkel in einen oberen Abschnitt und einen unteren Abschnitt unterteilt, wobei in den oberen Abschnitt eines Profils, der untere Abschnitt eines zweiten Profils einschiebbar ist und beide Abschnitte formschlüssig aneinander liegen.

Vorteilhaft ist es hierbei, wenn der horizontale Absatz die Schenkel in einen oberen Abschnitt und einen unteren Abschnitt mit einer annähernd gleichen lichten Innenhöhe unterteilt, wobei an dem vertikalen Außenschenkel des Winkels am oberen Ende auf dessen Innenseite und am unteren Ende auf dessen Außenseite jeweils ein Gleitstück von gleicher Breite angeordnet sind, deren Höhe etwa der halben lichten Innenhöhe der Abschnitte entspricht, wobei die lichte Breite des oberen Abschnittes auf der Seite des Schenkels des U-Profilteiles um annähernd der Materialdicke des Profils und auf der Seite des vertikalen Außenschenkels des Winkels um die Materialdicke des Profils und der Breite des Gleitstückes größer als die lichte Breite des unteren Abschnittes ist, wobei die waagerechte Fläche der Gleitstücke bei ineinander geschobenen Profilen aneinander anliegen.

Hierdurch wird eine sichere Befestigung der Bauteile erreicht und die formschlüssige Verbindung der Profile gesichert. Die Gleitstücke verhindern ein gegenseitiges Aufklappen der Profile.

Die Sicherheit der Verbindung kann weiterhin dadurch erhöht werden, daß auf beiden Seiten des nach unten offenen U-Profilteiles jeweils ein oberer Abschnitt und ein unterer Abschnitt ineinander verschiebbar angeordnet sind.

Vorzugsweise weist der horizontale Steg des mittleren U-Profilteiles zwei seitliche Auflageflächen für die plattenförmigen Bauteile und eine zwischen den Auflageflächen liegende Vertiefung auf. Hierbei kann zwischen der seitlichen Auflagefläche und dem plattenförmigen Bauteil eine Dichtung angeordnet sein. Zur Befestigung der Bauteile an den Profilen ist es zweckmäßig, daß in dem oberen Abschnitt des Profils an einer vorbestimmten Stelle in den Schenkeln des U-Profilteiles und den Außenschenkeln des Winkels Bohrungen zur horizontalen Aufnahme eines Haltebolzens angeordnet sind, wobei auf dem Haltebolzen der Haken für die Halterung der plattenförmigen Bauteile schwenkbar gelagert ist.

Die Haken können auf dem Haltebolzen seitlich außen, neben dem Außenschenkel oder in dem oberen Abschnitt des Profils angeordnet sein.

Vorzugsweise sind in dem horizontalen Schenkel des Winkels Öffnungen zur Aufnahme der Befestigungselemente, zur Befestigung des Profils an einem Gerüstteil, angeordnet. Eine bevorzugte Ausführung besteht dabei darin, daß die Öffnungen im Bereich des oberen Endes des Profils in dem von dem unteren Abschnitt eines zweiten Profils überdeckten Bereich angeordnet sind.

Zur Erreichung der erforderlichen Festigkeitswerte und eines geringen Gewichtes ist es zweckmäßig das Profil aus Aluminium oder einer Aluminiumlegierung auszubilden.

Die Erfindung wird an einem Ausführungsbeispiel näher erläutert. In der zugehörigen Zeichnung zeigen:
- Fig. 1: die Seitenansicht der Vorrichtung mit eingehängten plattenförmigen Bauteilen;
- Fig. 2: den Schnitt A-A nach Fig.1 in vergrößerter Darstellung;
- Fig. 3: den Schnitt B-B nach Fig.1 in vergrößerter und teilweiser Darstellung;
- Fig. 4: eine perspektivische Ansicht des Hakens zum Einhängen der plattenförmigen Bauteile.

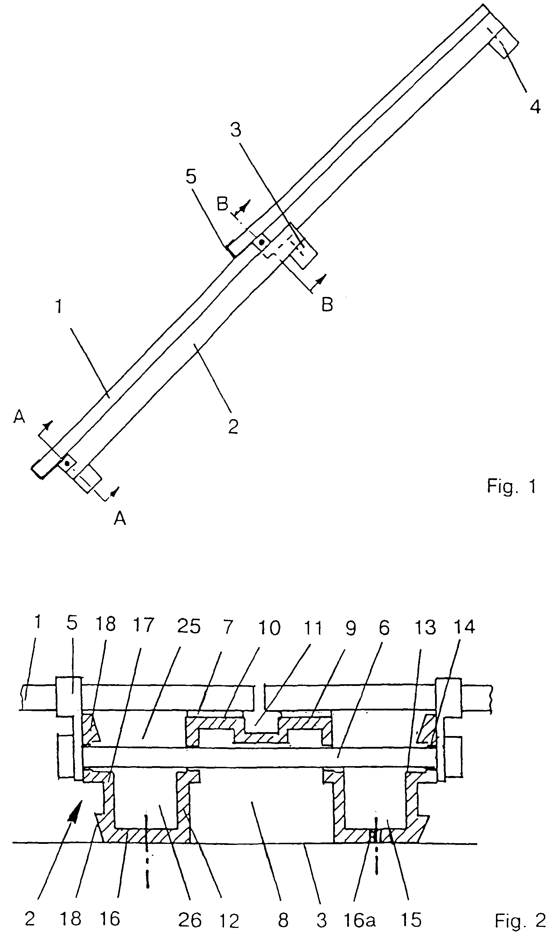

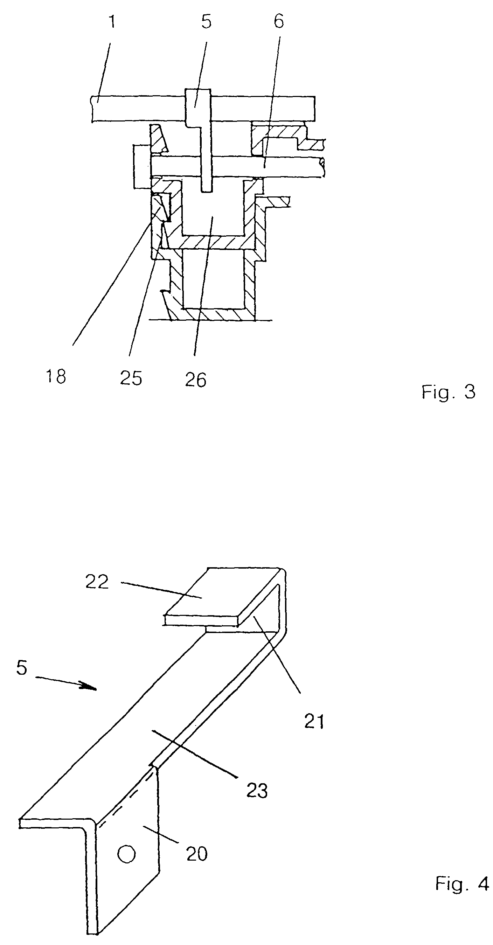

In Fig. 1 ist eine Vorrichtung gezeigt mit der plattenförmige Bauteile 1, als Solarmodule, in Längsrichtung auf einem schrägen Dach, schuppenförmig übereinanderliegend, angeordnet sind. Dabei übergreift das in Richtung des Dachfirstes oben liegende Solarmodul mit seinem vorderen Ende das hintere Ende des darunter liegenden Solarmoduls. Die Solarmodule liegen auf sich ebenfalls in Längsrichtung des Daches erstreckenden Profilen 2. Die Profile 2 sind an horizontal verlaufenden Gerüstteilen 3 in Form von Dachlatten befestigt. An dem vorderen Ende des Profils 2 ist ein Haken 5, wie in Fig.4 gezeigt, angeordnet. Das plattenförmige Bauteil 1 ist mit seinem vorderen Ende in den Haken 5 eingeschoben.

Mit der Vorrichtung ist es möglich rahmenlose und mit Rahmen versehene Solarmodule zu befestigen. Es können aber auch andere plattenförmige Bauteile 1, wie beispielsweise Sonnenkollektoren oder Verkleidungselemente befestigt werden. Die Vorrichtung ist auch zur Befestigung von plattenförmigen Bauteilen 1 an vertikalen Wänden zu verwenden.

In Fig. 2 ist ein Profil 2 im eingebauten Zustand, nach Fig.1, gezeigt. Das Profil 2 besteht aus Metall, vorzugsweise Aluminium oder einer Aluminiumlegierung. Es weist einen mittleren, nach unten offenen U-Profilteil 8 auf an dessen beiden Schenkeln 12, an ihren freien Enden, sich jeweils ein nach oben offener rechter Winkel 15 anschließt dessen vertikaler Außenschenkel 17 das Profil 2 seitlich begrenzt. Der horizontale Steg 9 des U-Profilteiles 8 ist mit zwei seitlichen Auflageflächen 10 und einer zwischen diesen liegende Vertiefung 11 versehen. In den vertikalen Schenkeln 12 des U-Profilteiles 8 und den vertikalen Außenschenkeln 17 der Winkel 15 ist in gleicher Höhe ein horizontaler Absatz 13 angeordnet, der die Schenkel 12; 17 in einen oberen Abschnitt 25 und einen unteren Abschnitt 26, mit einer annähernd gleichen lichten Innenhöhe, unterteilt. An dem vertikalen Außenschenkel 17 des Winkels 15 ist am oberen Ende auf dessen Innenseite und am unteren Ende auf dessen Außenseite ein Gleitstück 18 von gleicher Breite angeordnet, dessen Höhe etwa der halben lichten Innenhöhe der Abschnitte 25; 26 entspricht. Die lichte Breite des oberen Abschnittes 25 ist, auf der Seite des Schenkels 12 des U-Profilteiles 8 um annähernd der Materialdicke des Profils 2 und auf der Seite des vertikalen Außenschenkels 17 des Winkels 15 um die Materialdicke des Profils 2 und der Breite des Gleitstückes 18, größer als die lichte Breite des unteren Abschnittes 26. Damit können die Profile 2 in Längsrichtung ineinander geschoben werden.

In dem oberen Abschnitt 25 des Profils 2 sind an einer vorbestimmten Stelle in den Schenkeln 12 und den Außenschenkeln 17 Bohrungen 14, zur horizontalen Aufnahme eines Haltebolzens 6, angeordnet. Auf dem Haltebolzen 6 ist der Haken 5 für die Halterung der plattenförmigen Bauteile 1 schwenkbar gelagert.

In dem horizontalen Schenkel 16 des Winkels 15 sind Öffnungen 16a zur Aufnahme der Befestigungselemente 4 vorgesehen.

Mit den Befestigungselementen 4, bei dem Beispiel Holzschrauben, sind die Profile 2 an ihren oberen Enden an den Gerüstteilen 3 d.h. an den Dachlatten befestigt.

Das untere Ende des oberen Profils 2 ist, wie in Fig.3 näher gezeigt, in das obere Ende des darunter liegenden Profils 2 eingeschoben oder am unteren Ende der Vorrichtung ebenfalls an einem Gerüstteil 3 befestigt.

Dabei kann das Befestigungselement 4 entsprechend der Ausbildung des Gerüstteiles 3 unterschiedliche gestaltet sein.

Auf den Profilen 2 liegen, wie in Fig.2 gezeigt, die horizontal nebeneinander angeordneten plattenförmigen Bauteile 1 mit ihren seitlichen Rändern auf jeweils einer der Auflageflächen 10 des mittleren U-Profilteiles 8 auf, wobei sich zwischen diesen ein, ein gegenseitiges Anstoßen verhindernder, Spalt 24 über der Vertiefung 11 befindet. Über die Vertiefung 11 fließt eindringende Feuchtigkeit, wie Regenwasser, nach unten ab. Zwischen dem plattenförmigen Bauteil 1 und der Auflagefläche 10 des Profils 2 kann eine Dichtung 7, aus Neopren oder einem Gummi, angeordnet sein. Diese dient zur schonenden Auflage des plattenförmigen Bauteiles 1, insbesondere eines Solarmodules. Die Dichtung 7 ist gleichzeitig geeignet ein Eindringen von Feuchtigkeit zu verhindern.

Wie bereits vorstehend beschrieben, ist auf einem Haltebolzen 6, der in der Bohrung 14 des Profils 2 horizontal angeordnet ist, ein Haken 5 schwenkbar gelagert. Der Haltebolzen 6 besteht zweckmäßigerweise aus Edelstahl und kann als eine Spezialschraube ausgebildet sein. Der Haken 5 ist, wie in Fig. 2 gezeigt, seitlich neben dem Profil 2 oder wie in Fig. 3 gezeigt, im oberen Abschnitt 25 zwischen dem Schenkel 12 und dem Außenschenkel 17 angeordnet. Durch seine schwenkbare Anordnung ist es möglich, daß bei der Montage das plattenförmige Bauteil 1 von unten nach oben auf das Profil 2 aufgeschoben werden kann und dann der Haken 5 in die Haltestellung geklappt wird. Danach wird das Bauteil 1, beispielsweise ein Solarmodul, in den Haken 5 eingeschoben und verhindert dessen Abrutschen, während es mit seinem oberen Ende unter dem darüber angeordneten Bauteil 1 liegt. Der Haken 5 ist in der Fig. 4 näher dargestellt. Er weist einen Schenkel 20 auf, mit dem er auf dem Haltebolzen 6 schwenkbar gelagert ist. Rechtwinklig an diesem Schenkel 20 ist seitlich ein sich nach vorn erstrekkender Steg 23 angeordnet. Das vordere Ende des Steges 23 bildet die eigentliche Aufnahme, wobei ein Schenkel 21 nach oben in die entgegengesetzte Richtung zum Schenkel 20 und ein zweiter Schenkel 22 nach hinten in Richtung des Steges 23 abgebogen ist. Die lichte Weite zwischen dem Steg 23 und dem Schenkel 22 entspricht dabei der Dicke des plattenförmigen Bauteiles 1.

Durch die Länge des Steges 23 ist dabei im wesentlichen die Haltung des Bauteiles 1 sowie die schuppenförmige Überlappung des plattenförmigen Bauteiles 1 in Längsrichtung bestimmt.

In Fig. 3 ist gezeigt, wie die Profile 1 montiert sind um die schuppenförmige Anordnung zu erreichen. Das hintere Ende des unteren Profils 2 ist mit dem Befestigungselement 4, im vorliegenden Beispiel eine Holzschraube, an dem Gerüstteil 3 befestigt. Das vordere Ende des oben liegenden Profils 2 wird mit seinem unteren seitlichen Abschnitt 26 in den oberen seitlichen Abschnitt 25 des unteren Profils 2 eingeschoben.

Die vorstehend beschriebene konstruktive Ausbildung des Profiles 2 gewährleistet dabei eine formschlüssige Verbindung beider Profile. Dabei liegen die waagerechten Flächen der an den vertikalen Außenschenkeln 17 angeordneten Gleitstücken 18 aneinander an und verhindern auf diese Weise ein Lösen durch Anheben des obenliegenden Profils 1.

Der Haltebolzen 6 für die klappbare Lagerung des Hakens 5 ist im oberen Abschnitt 25 des oberen Profils 2 angeordnet, so daß das plattenförmige Bauteil 1 über das darunter liegende Bauteil 1 eingehängt werden kann und dadurch die schuppenförmige Anordnung erreicht wird.

Die Profile 2 können auf eine beliebige Länge ineinander geschoben werden, wodurch Längendifferenzen ausgleichbar sind.

### Aufstellung der verwendeten Bezugszeichen

- 1: plattenförmiges Bauteil
- 2: Profil
- 3: Gerüstteil
- 4: Befestigungselement
- 5: Haken
- 6: Haltebolzen
- 7: Dichtung
- 8: mittleres U-Profil
- 9: Steg
- 10: Auflagefläche
- 11: Vertiefung
- 12: Schenkel
- 13: Absatz
- 14: Bohrung
- 15: Winkel
- 16: Schenkel
- 16a: Öffnung
- 17: Außenschenkel
- 18: Gleitstück
- 20: Schenkel
- 21: Schenkel
- 22: Schenkel
- 23: Steg
- 24: Spalt
- 25: oberer Abschnitt
- 26: unterer Abschnitt

## Patentansprüche

1. Vorrichtung zur Befestigung von plattenförmigen Bauteilen, insbesondere von Solarmodulen und Sonnenkollektoren, vorzugsweise auf schrägen Flächen, insbesondere auf Steildächern, wobei die plattenförmigen Bauteile (1) in Längsrichtung, schuppenförmig übereinanderliegend, auf diesen angeordnet sind und der in Richtung der höherliegenden Seite oben liegende Bauteil (1) mit seinem vorderen Ende das hintere Ende des darunterliegenden Bauteiles (1) übergreift und die plattenförmigen Bauteile (1) auf den Profilen (2), die in Längsrichtung, an im wesentlichen horizontal liegenden Gerüstteilen (3), wie Dachlatten, befestigt sind und mit ihrem unteren Ende in Haken (5) eingehängt sind, wobei jedes Profil (2) auf seiner oberen Seite zwei sich in dessen Längsrichtung erstreckende, seitliche Auflageflächen (10) und eine zwischen diesen Auflageflächen liegende Vertiefung (11) aufweist und dabei die Bauteile (1) mit ihren seitlichen Rändern auf jeweils einer der Auflageflächen (10) des Profils (2) aufliegen und ein zwischen diesen frei bleibender Spalt über der Vertiefung (11) angeordnet ist, dadurch gekennzeichnet, daß das Profil (2) einen nach unten offenen U-Profilteil (8) aufweist, wobei mindestens an einem seiner vertikalen Schenkel (12) an dessem freien Ende sich ein nach oben offener Winkel (15) anschließt, dessen vertikaler Außenschenkel (17) das Profil (2) seitlich begrenzt, wobei in dem Schenkel (12) des U-Profilteiles (8) und dem zugehörigen Außenschenkel (17) des nach oben offenen Winkels (15) in gleicher Höhe ein horizontaler Absatz (13) angeordnet ist, der die Schenkel (12; 17) in einen oberen Abschnitt (25) und einen unteren Abschnitt (26) unterteilt, wobei in den oberen Abschnitt (25) eines Profils (2), der untere Abschnitt (26) eines zweiten Profils (2) einschiebbar ist und beide Abschnitte (25; 25) formschlüssig aneinander liegen.

2. Vorrichtung nach Anspruch 1, dadurch gekennzeichnet, daß der horizontale Absatz (13) die Schenkel (12; 17) in einen oberen Abschnitt (25) und einen unteren Abschnitt (26) mit einer annähernd gleichen lichten Innenhöhe unterteilt, wobei an dem vertikalen Außenschenkel (17) des Winkels (15) am oberen Ende auf dessen Innenseite und am unteren Ende auf dessen Außenseite jeweils ein Gleitstück (18) von gleicher Breite angeordnet sind, deren Höhe etwa der halben lichten Innenhöhe der Abschnitte (25; 26) entspricht, wobei die lichte Breite des oberen Abschnittes (25) auf der Seite des Schenkels (12) des U-Profilteiles (8) um annähernd der Materialdicke des Profils (2) und auf der Seite des vertikalen Außenschenkels (17) des Winkels (15) um die Materialdicke des Profils (2) und der Breite des Gleitstückes (8) größer als die lichte Breite des unteren Abschnittes (26) ist, wobei die waagerechte Fläche der Gleitstücke (18) bei ineinander geschobenen Profilen (2) aneinander anliegen.

3. Vorrichtung nach Anspruch 1 und 2, dadurch gekennzeichnet, daß auf beiden Seiten des nach unten offenen U-Profilteiles (8) jeweils ein oberer Abschnitt (25) und ein unterer Abschnitt (26) ineinander verschiebbar angeordnet sind.

4. Vorrichtung nach einem der Ansprüche 1 bis 3, dadurch gekennzeichnet, daß der horizontale Steg (9) des mittleren Profilteiles (8) zwei seitliche Auflageflächen (10) für die plattenförmigen Bauteile (1) und eine zwischen den Auflageflächen liegende Vertiefung (11) aufweist.

5. Vorrichtung nach Anspruch 4, dadurch gekennzeichnet, daß zwischen der seitlichen Auflagefläche (10) und dem plattenförmigen Bauteil (1) eine Dichtung (7) angeordnet ist.

6. Vorrichtung nach einem der Ansprüche 1 bis 5, dadurch gekennzeichnet, daß in dem oberen Abschnitt (25) des Profils (2) an einer vorbestimmten Stelle in den Schenkeln (12) des U-Profilteiles (8) und den Außenschenkeln (17) des Winkels (15) Bohrungen (14) zur horizontalen Aufnahme eines Haltebolzens (6) angeordnet sind, wobei auf dem Haltebolzen (6) der Haken (5) für die Halterung der plattenförmigen Bauteile (1) schwenkbar gelagert ist.

7. Vorrichtung nach Anspruch 6, dadurch gekennzeichnet, daß der Haken (5) auf dem Haltebolzen (6) seitlich außen, neben dem Außenschenkel (17), angeordnet ist.

8. Vorrichtung nach Anspruch 6, dadurch gekennzeichnet, daß der Haken (5) auf dem Haltebolzen (6) in dem oberen Abschnitt (25) des Profils (2) angeordnet ist.

9. Vorrichtung nach einem der Ansprüche 1 bis 8, dadurch gekennzeichnet, daß in dem horizontalen Schenkel (16) des Winkels (15) Öffnungen (16a) zur Aufnahme der Befestigungselemente (4), zur Befestigung des Profils (2) an einem Gerüstteil (3), angeordnet sind.

10. Vorrichtung nach Anspruch 9, dadurch gekennzeichnet, daß die Öffnungen (16a) im Bereich des oberen Endes des Profils (2) in dem von dem unteren Abschnitt (26) eines zweiten Profils (2) überdeckten Bereich angeordnet sind.

11. Vorrichtung nach einem der Ansprüche 1 bis 10, dadurch gekennzeichnet, daß das Profil (2) aus Aluminium oder einer Aluminiumlegierung besteht.

## Claims

1. A device for fastening plate-shaped components, more particularly solar modules and solar collectors, preferably to inclined surfaces, more particularly to pitched roofs, the plate-shaped components (1) being arranged on the pitched roofs in the longitudinal direction, overlapping in the manner of scales, and the upper component (1) in the direction of the higher end engaging with its front end over the rear end of the underlying component (1) and the plate-shaped components (1) being fastened to the profiles (2), which are secured in the longitudinal direction to substantially horizontally extending frame elements (3), such as roof battens, and being suspended with their lower end in hooks (5), each profile (2) comprising, on its upper side, two lateral bearing surfaces (10) extending in the longitudinal direction of said profile and a recess (11) lying between said bearing surfaces, and in this respect the components (1) resting with their lateral edges upon one of the bearing surfaces (10) of the profile (2) in each case, and a gap which remains free between the lateral edges being disposed above the recess (11), characterised in that the profile (2) comprises a U-profile section (8) open at the bottom, an angle plate (15), which is open at the top, adjoining at least one of the vertical limbs (12) of said U-profile section (8) at the free end of said limb, the vertical outer limb (17) of the angle plate (15) laterally defining the profile (2), a horizontal step (13) being arranged at the same height in the limb (12) of the U-profile section (8) and the associated outer limb (17) of the angle plate (15) open at the top, which step divides the limbs (12; 17) into an upper section (25) and a lower section (26), the lower section (26) of a second profile (2) being insertable into the upper section (25) of a first profile (2) and both sections (25; 25) resting against one another in a positive-locking manner.

2. A device according to claim 1, characterised in that the horizontal step (13) divides the limbs (12; 17) into an upper section (25) and a lower section (26) with an approximately equal clear internal height, a sliding element (18) of equal width being arranged on the vertical outer limb (17) of the angle plate (15) at the upper end on the inside of said angle plate and at the lower end on the outside of said angle plate, the height of said sliding elements (18) corresponding to approximately half the clear internal height of the sections (25; 26), the clear width of the upper section (25) being greater than the clear width of the lower section (26) by approximately the material thickness of the profile (2) on the side of the limb (12) of the U-profile section (8) and by the material thickness of the profile (2) and the width of the sliding element (8) on the side of the vertical outer limb (17) of the angle plate (15), the horizontal surfaces of the sliding elements (18) resting against one another when the profiles (2) are inserted into one another.

3. A device according to claims 1 and 2, characterised in that both an upper section (25) and a lower section (26) are arranged on either side of the U-profile section (8) open at the bottom so as to be interconnectable by sliding into one another.

4. A device according to one of claims 1 to 3, characterised in that the horizontal web (9) of the central profile section (8) comprises two lateral bearing surfaces (10) for the plate-shaped components (1) and a recess (11) lying between said bearing surfaces.

5. A device according to claim 4, characterised in that a seal (7) is arranged between the lateral bearing surfaces (10) and the plate-shaped component (1).

6. A device according to one of claims 1 to 5, characterised in that bores (14) for horizontally receiving a retaining bolt (6) are arranged in the upper section (25) of the profile (2) at a predetermined location in the limbs (12) of the U-profile section (8) and the outer limbs (17) of the angle plate (15), the hook (5) for fastening the plate-shaped components (1) being pivotably mounted on the retaining bolt (6).

7. A device according to claim 6, characterised in that the hook (5) is arranged laterally on the retaining bolt (6) on the outside, adjacent the outer limb (17).

8. A device according to claim 6, characterised in that the hook (5) is arranged on the retaining bolt (6) in the upper section (25) of the profile (2).

9. A device according to one of claims 1 to 8, characterised in that openings (16a) for receiving the fastening element (4), for fastening the profile (2) to a frame element (3), are arranged in the horizontal limb (16) of the angle plate (15).

10. A device according to claim 9, characterised in that the openings (16a) are arranged in the region of the upper end of the profile (2) in the region covered by the lower section (26) of a second profile (2).

11. A device according to one of claims 1 to 10, characterised in that the profile (2) is made of aluminium or an aluminium alloy.

## Revendications

1. Dispositif de fixation d'éléments en forme de plaque, en particulier de modules solaires et de collecteurs solaires, de préférence sur des surfaces obliques, en particulier sur des toits à forte pente, les éléments en forme de plaque (1) étant placés dans la direction longitudinale et chevauchants sur ceux-ci et l'élément (1) situé en haut en direction du côté supérieur coiffant par son extrémité avant l'extrémité arrière de l'élément (1) situé dessous, et les éléments en forme de plaque (1) reposant sur des profilés (2) s'étendant dans la direction longitudinale fixés à des éléments de charpente sensiblement horizontaux (3), tels que lattes de toit, et étant accrochés par leur extrémité inférieure à des crochets (5), chaque profilé (2) présentant sur son côté supérieur deux surfaces d'appui latérales (10) s'étendant dans sa direction longitudinale et un creux (11) situé entre ces surfaces d'appui, et les éléments (1) reposant par chaque bord latéral sur une des surfaces d'appui (10) du profilé (2), et un interstice restant libre entre celles-ci se trouvant au-dessus du creux (11), caractérisé par le fait que le profilé (2) présente une partie en U ouverte vers le bas (8), au moins à une des ailes verticales (12) de celle-ci se joint, à l'extrémité libre de cette aile, une cornière ouverte vers le haut (15) dont l'aile extérieure verticale (17) limite latéralement le profilé (2), dans l'aile (12) de la partie en U (8) du profilé et l'aile extérieure correspondante (17) de la cornière ouverte vers le haut (15) est prévu à la même hauteur un décrochement horizontal (13) qui divise les ailes (12, 17) en une partie supérieure (25) et une partie inférieure (26), dans la partie supérieure (25) d'un profilé (2) peut être glissée la partie inférieure (26) d'un deuxième profilé (2), et les deux parties (25, 26) s'appuient l'une sur l'autre avec emboîtement.

2. Dispositif selon la revendication 1, caractérisé par le fait que le décrochement horizontal (13) divise les ailes (12 ; 17) en une partie supérieure (25) et une partie inférieure (26) de hauteur intérieure libre à peu près égale, sur l'aile extérieure verticale (17) de la cornière (15) est placée, à l'extrémité supérieure sur le côté intérieur et à l'extrémité inférieure sur le côté extérieur, une pièce de coulissement (18) de même largeur dont la hauteur correspond à peu près à la moitié de la hauteur intérieure libre des parties (25 ; 26), la largeur intérieure de la partie supérieure (25) est, sur le côté de l'aile (12) de la partie en U (8) du profilé, supérieure approximativement de l'épaisseur de matière du profilé (2) à la largeur intérieure de la partie inférieure (26) et, sur le côté de l'aile extérieure verticale (17) de la cornière (15), supérieure de l'épaisseur de matière du profilé (2) et de la largeur de la pièce de coulissement (8) à la largeur intérieure de la partie inférieure (26), et lorsque les profilés (2) sont glissés l'un dans l'autre, les surfaces horizontales des pièces de coulissement (18) s'appuient l'une sur l'autre.

3. Dispositif selon les revendications 1 et 2, caractérisé par le fait que sur chaque côté de la partie en U ouverte vers le bas (8) du profilé sont placées, coulissantes l'une dans l'autre, une partie supérieure (25) et une partie inférieure (26).

4. Dispositif selon l'une des revendications 1 à 3, caractérisé par le fait que l'âme horizontale (9) de la partie centrale (8) du profilé présente deux surfaces d'appui latérales (10) pour les éléments en forme de plaque (1) et un creux (11) situé entre ces surfaces d'appui.

5. Dispositif selon la revendication 4, caractérisé par le fait qu'entre la surface d'appui latérale (10) et l'élément en forme de plaque (1) est placé un joint d'étanchéité (7).

6. Dispositif selon l'une des revendications 1 à 5, caractérisé par le fait que dans la partie supérieure (25) du profilé (2) sont faits à un endroit déterminé dans les ailes (12) de la partie en U (8) du profilé et les ailes extérieures (17) de la cornière (15) des trous (14) destinés au montage horizontal d'un boulon de fixation (6), et sur ce boulon (6) est monté basculant le crochet (5) pour la fixation des éléments en forme de plaque (1).

7. Dispositif selon la revendication 6, caractérisé par le fait que le crochet (5) est placé sur le boulon de fixation (6) latéralement à l'extérieur près de l'aile extérieure (17).

8. Dispositif selon la revendication 6, caractérisé par le fait que le crochet (5) est placé sur le boulon de fixation (6) dans la partie supérieure (25) du profilé (2).

9. Dispositif selon l'une des revendications 1 à 8, caractérisé par le fait que'dans l'aile horizontale (16) de la cornière (15) sont faites des ouvertures (16a) destinées à recevoir les éléments de fixation (4) pour la fixation du profilé (2) à un élément de charpente (3).

10. Dispositif selon la revendication 9, caractérisé par le fait que les ouvertures (16a) sont faites dans la zone de l'extrémité supérieure du profilé (2) dans la zone couverte par la partie inférieure (26) d'un deuxième profilé (2).

11. Dispositif selon l'une des revendications 1 à 10, caractérisé par le fait que le profilé (2) est en aluminium ou en alliage d'aluminium.
